# EUROPÄISCHE PATENTSCHRIFT

(11) **EP 2 863 163 B1**
(45) Veröffentlichungstag und Bekanntmachung des Hinweises auf die Patenterteilung: **26.04.2017**
(21) Anmeldenummer: 14003509.8
(22) Anmeldetag: 14.10.2014
(51) Int. Cl.: F41H 5/26

(54) **Winkelspiegel**
Periscope
Périscope

(30) Priorität: 18.10.2013 DE 102013111541; 26.11.2013 DE 102013113024
(43) Veröffentlichungstag der Anmeldung: 22.04.2015
(73) Patentinhaber: GuS Periscopes GmbH & Co. KG, 32312 Lübbecke (DE)
(72) Erfinder: Kuhnke, Dieter, 32312 Lübbecke (DE)
(74) Vertreter: Rolf, Gudrun, LL.M

(56) Entgegenhaltungen:
- WO-A1-2010/102597
- CN-A- 102 649 623
- DE-A1- 3 627 716
- DE-A1-102009 023 161
- US-B1- 7 719 749

## Beschreibung

Die Erfindung betrifft einen Winkelspiegel für gepanzerte Fahrzeuge gemäß dem Oberbegriff des Hauptanspruches.

Es ist eine Winkelspiegelanordnung aus einem Prismenblock mit in einem Gehäuse mit einem Einblick und einem Ausblick sowie mit einer der Einblickseite gegenüberliegend angeordneten Anzeigeeinheit zur umlenkspiegelfreien Darstellung von Informationen im Einblick bekannt, DE 36 27 716 A1, die ein sehr schmales ein- oder zweizeiliges Anzeigefeld aufweist, mit dem nur wenige Informationen in den Einblick eines Winkelspiegels eingeblendet werden können.

Nachteilig an dieser vorbekannten Winkelspiegelanordnung ist zum einen der nur sehr beschränkte Informationsinhalt des kleinen Anzeigefeldes und zum anderen die Art der Anordnung am Gehäuse über einen Luftspalt zum Prismenblock, so dass eingeschlossene feuchte Luft zu Feuchtbeschläge und Kondensatbildung auf dem Prismenblock oder der Anzeigeeinheit führen können, was die Funktionssicherheit des Winkelspiegels negativ beeinflusst.

Aufgabe der Erfindung ist es, einen Winkelspiegel für gepanzerte Fahrzeuge zur Verfügung zu stellen, der bei einer funktionssicheren Ausgestaltung die Anzeigemöglichkeit wesentlich verbessert.

Die Lösung dieser Aufgabe ergibt sich in Verbindung mit den Merkmalen des Oberbegriffes erfindungsgemäß aus den technischen Merkmalen des kennzeichnenden Teils des ersten Patentanspruches insbesondere dadurch, dass ein Ausblickbild auf einem unteren Bereich und ein Anzeigebild der Anzeigeeinheit auf einem oberen Bereich des Einblickes sichtbar ist und dass der obere Bereich mindestens der Hälfte des Maßes der Höhe des Einblickes entspricht.

Diese erfinderische Neuerung ermöglicht eine binokulare Informations-einblendung von Informationen aller Art über ein elektronisches Display, auch Fahrweginformationen oder Nachtsichteinblendungen, die ebenfalls binokular möglich sind. Weiterhin ist bei voller Displayfunktion gleichzeitig das volle Sehfeld des Winkelspiegels nutzbar, ohne dass Veränderungen der Sichtposition des Beobachters erforderlich sind, so dass gleichzeitig simultane Überwachungsmöglichkeiten gegeben sind.

Ein weiterer Vorteil des erfindungsgemäßen Winkelspiegels besteht darin, dass die volle Funktion bezüglich normaler Sehfeldnutzung auch bei Stromausfall aufrechterhalten bleibt.

Vorteilhaft an dem neuen Winkelspiegel ist weiterhin, dass er zur Vermeidung von Feuchtigkeitsbeschlägen und Kondensat zwischen der Anzeigeeinheit und dem Prismenblock in dem Luftspalt mit einer Heizung ausgestattet ist, so dass die Funktion der Anzeigeeinheit auch bei widrigen Umgebungsbedingungen stets gewährleistet bleibt, wobei die Heizung aus einer auf der der Anzeigeneinheit gegenüberliegenden Fläche des Prismenblockes und/ oder auf der Anzeigeneinheit angeordnet ist.

Weitere vorteilhafte Ausgestaltungen des Gegenstandes der Erfindung ergeben sich mit und in Kombination aus den nachfolgenden Unteransprüchen.

Entsprechend einer bevorzugten Ausführungsform der Erfindung besteht die Heizung aus einer Heizfolie oder einer ITO-Beschichtung (Indiumzinnoxyd) zur Beheizung der optischen Flächen, wobei diese Heizungen als Elektrowiderstandsheizungen funktionieren.

Weitere vorteilhafte Ausgestaltungen des Gegenstandes der Erfindung ergeben sich mit und in Kombination aus den nachfolgenden Unteransprüchen.

Entsprechend einer bevorzugten Ausführungsform der Erfindung besteht die Heizung aus einer Heizfolie oder einer ITO-Beschichtung (Indiumzinnoxyd) zur Beheizung der optischen Flächen, wobei diese Heizungen als Elektrowiderstandsheizungen funktionieren.

Bei einer anderen oder auch zusätzlichen Ausführungsform der Erfindung ist die Anzeigeneinheit und/ oder deren gegenüberliegende Fläche des Prismenblockes mit einer Nanobeschichtung gegen Frostansatz versehen, so dass bereits ohne oder bei nicht in Betrieb befindlicher Heizung das Anzeigebild der Anzeigeeinheit im Einblick deutlich sichtbar bleibt.

Zur Verbesserung der Transparenz und der Brillanz des Anzeigebildes ist bei einer weiteren verbesserten Ausführungsform 'vor dem Einblick ein Antireflexglas angeordnet.

Um die volle Funktionsfähigkeit der Anzeigeeinheit zu gewährleisten, besteht der Prismenblock aus Glas oder PMMA.

Des Weiteren ist der erfinderische Winkelspiegel mit solcherlei Außenabmessungen ausgestattet, die mit denen handelsüblicher Winkelspiegel übereinstimmen, so dass der erfinderische Winkelspiegel ohne konstruktive Änderungen gegen bekannte Winkelspiegel austauschbar ist.

Weiterhin ist von Vorteil, dass die Anzeigeeinheit im Falle eines Defektes auswechselbar am Gehäuse des Winkelspiegels angeordnet ist, so dass ein Austausch schnell und einfach durchführbar ist.

Nachfolgend ist ein Ausführungsbeispiel der Erfindung anhand von Zeichnungen näher beschrieben. Es zeigen:

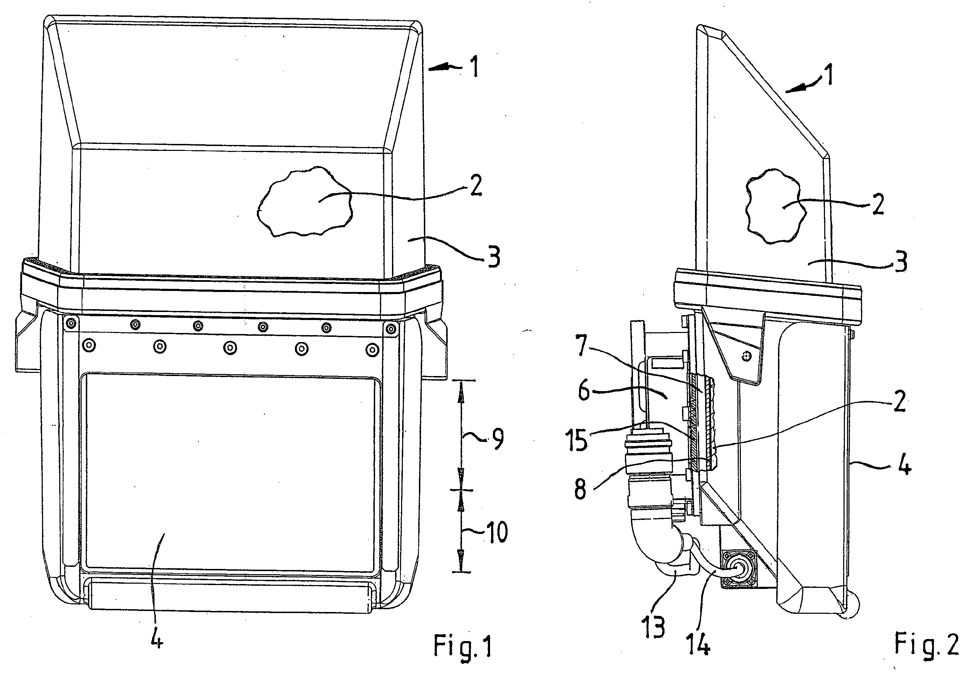

- Fig. 1: einen Winkelspiegel von hinten mit Blick auf die Einblickseite,
- Fig. 2: den Winkelspiegel gemäß Fig. 1 in einer Seitenansicht von links,

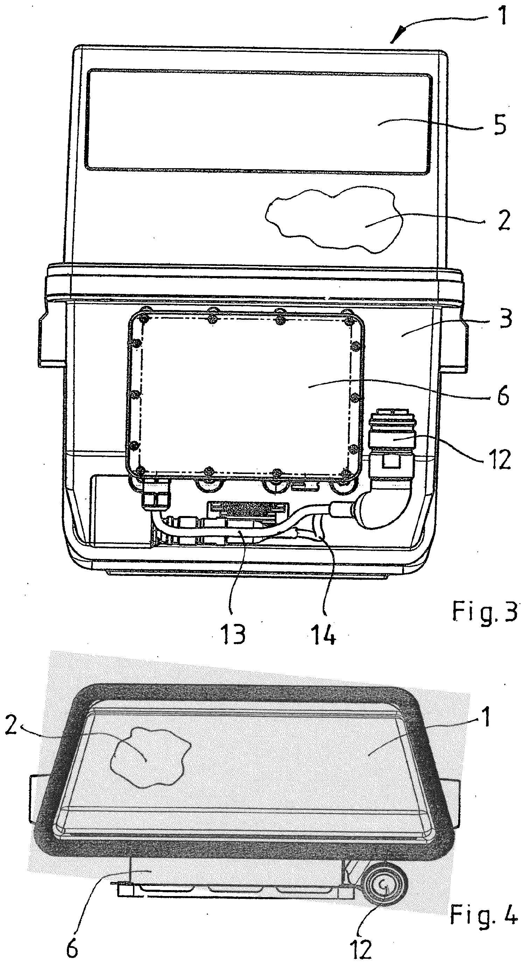

- Fig. 3: den Winkelspiegel gemäß Fig. 1 und 2 in einer Ansicht von vorne auf die Ausblickseite, und
- Fig. 4: eine Draufsicht auf einen Winkelspiegel gemäß den Fig. 1 bis 3.

Der Winkelspiegel 1 für gepanzerte Fahrzeuge besteht aus einem Prismenblock 2 in einem Gehäuse 3 mit einem Einblick 4 und einem Ausblick 5, sowie aus einer der Einblickseite gegenüberliegend angeordneten Anzeigeeinheit 6 zur umlenkspiegelfreien Darstellung von Informationen im Einblick 4, wobei gleichzeitig ein Ausblickbild auf einem unteren Bereich 10 und ein Anzeigebild der Anzeigeeinheit 6 auf einem oberen Bereich 9 des Einblicks 4 sichtbar ist und der obere Bereich 9 mindestens der Hälfte des Maßes der Höhe des Einblickes 4 entspricht. Das Display 15 der Anzeigeeinheit kann dabei beispielsweise eine Displaygröße von 180 x 80 mm als Darstellungsfläche aufweisen.

Zwischen der Anzeigeeinheit 6 und dem Prismenblock 2 ist ein Luftspalt 7 vorhanden und der Winkelspiegel 1 zur Vermeidung von Feuchtbeschlägen und Kondensat dort mit einer Heizung versehen, wobei diese Heizung aus einer der Anzeigeeinheit 6 gegenüberliegenden Fläche des Prismenblockes 2 aufgebrachten Heizfolie 8 oder aus einer ITO-Beschichtung aus Indiumzinnoxyd zur Beheizung der optischen Fläche ausgestattet sein kann, ebenso wie das Display 15 der Anzeigeneinheit 6 mit einer solchen Heizfolie 8 oder einer ITO-Beschichtung versehen sein kann.

Alternativ oder zusätzlich kann die Anzeigeneinheit 6 und/ oder deren gegenüberliegende Fläche des Prismenblockes 2 bzw. die drauf angeordneten Heizfolien 8 oder ITO-Beschichtungen mit einer zusätzlichen Nanobeschichtung gegen Frostansatz versehen sein.

Zur Verbesserung der Transparenz und der Brillanz des Anzeigebildes kann vor dem Einblick 4 ein zeichnerisch nicht dargestelltes Antireflexglas angeordnet sein.

Der Prismenblock 2 besteht, um die volle Funktionsfähigkeit der Anzeigeneinheit 6 zu gewährleisten, aus Glas oder PMMA. Das Gehäuse 2 des Winkelspiegels 1 weist dabei solche Außenabmessungen auf, die mit denen handelsüblicher Winkelspiegel übereinstimmen, so dass er ohne konstruktive Änderungen gegen herkömmliche Winkelspiegel austauschbar ist.

Die Anzeigeeinheit 6 ist ebenfalls auswechselbar am Gehäuse 2 des Winkelspiegels 1 angeordnet, um nach einem Defekt kurzfristig ausgetauscht werden zu können.

Der Winkelspiegel 1 wird über einen Anschlußstecker 12 und eine Stromzuführung 13 für die Anzeigeeinheit 6 und eine Stromzuführung 14 für die Heizung mit Energie versorg.

## Patentansprüche

1. Winkelspiegel für gepanzerte Fahrzeuge, aus einem Prismenblock (2) in einem Gehäuse (3) mit einem Einblick (4) und einem Ausblick (5) sowie mit einer der Einblickseite gegenüberliegend, angeordneten Anzeigeeinheit (6) zur umlenkspiegelfreien Darstellung von Informationen im Einblick (4), wobei ein Ausblickbild auf einem unteren Bereich (10) und ein Anzeigebild der Anzeigeeinheit (6) auf einem oberen Bereich (9) des Einblickes (4) sichtbar ist, **dadurch gekennzeichnet, dass** der obere Bereich (9) des Einblickes (4) mindestens der Hälfte des Maßes der Höhe des Einblickes (4) entspricht und zwischen der Anzeigeeinheit (6) und dem Prismenblock (2) ein Luftspalt (7) besteht und eine optische Fläche des Winkelspiegels (1) zur Vermeidung von Feuchtbeschlägen oder Kondensat mit einer Heizung ausgestattet ist, die auf der der Anzeigeeinheit (6) gegenüberliegenden Fläche des Prismenblockes (2) und/ oder auf der Anzeigeneinheit (6) aufgebracht ist.

2. Winkelspiegel nach Anspruch 1, **dadurch gekennzeichnet, dass** die Heizung der optischen Fläche aus einer Heizfolie (8) besteht

3. Winkelspiegel nach Anspruch 1, **dadurch gekennzeichnet, dass** die Heizung der optischen Fläche aus einer ITO-Beschichtung (Indium-Zinn-Oxyd) besteht.

4. Winkelspiegel nach einem der vorgenannten Ansprüche **dadurch gekennzeichnet, dass** die Anzeigeneinheit (6) und/ oder deren gegenüberliegende Fläche des Prismenblockes (2) mit einer Nanobeschichtung gegen Frostansatz versehen ist.

5. Winkelspiegel nach einem der vorgenannten Ansprüche, **dadurch gekennzeichnet, dass** vor dem Einblick (4) zur Verbesserung der Transparenz und der Brillanz des Anzeigebildes ein Antireflexglas angeordnet ist.

6. Winkelspiegel nach einem der vorgenannten Ansprüche, **dadurch gekennzeichnet, dass** der Prismenblock (2), um die volle Funktionsfähigkeit des Displays (15) zu gewährleisten, aus Glas oder PMMA besteht.

7. Winkelspiegel nach einem der vorgenannten Ansprüche, **dadurch gekennzeichnet, dass** er Außenabmessungen aufweist, die mit denen handelsübliche Winkelspiegel übereinstimmen und dass der ohne konstruktive Änderungen gegen solche austauschbar ausgebildet ist.

8. Winkelspiegel nach einem der vorgenannten Ansprüche, **dadurch gekennzeichnet, dass** die Anzeigeeinheit (6) auswechselbar am Gehäuse (3) des Winkelspiegels (1) angeordnet ist.

## Claims

1. Periscope for armoured vehicles, comprising a prism block (2) in a housing (3) with an inwardly viewing window (4) and an outwardly viewing window (5) and also with a display unit (6) arranged opposite the inwardly viewing side for displaying information in the inwardly viewing window (4) without a deflecting mirror, an outwardly viewing image being visible on a lower region (10) and a display image of the display unit (6) being visible on an upper region (9) of the inwardly viewing window (4), **characterized in that** the upper region (9) of the inwardly viewing window (4) corresponds to at least half the amount of the height of the inwardly viewing window (4) and between the display unit (6) and the prism block (2) there is an air gap (7), and to avoid misting or condensation an optical area of the periscope (1) is provided with a heating means, which is provided on the area of the prism block (2) opposite the display unit (6) and/or on the display unit (6)

2. Periscope according to Claim 1, **characterized in that** the heating means of the optical area consists of a heating film (8).

3. Periscope according to Claim 1, **characterized in that** the heating means of the optical area consists of an ITO coating (indium-tin-oxide).

4. Periscope according to one of the preceding claims, **characterized in that** the display unit (6) and/or the area of the prism block (2) opposite it is provided with an antifrosting nanocoating.

5. Periscope according to one of the preceding claims, **characterized in that**, to improve the transparency and the brilliance of the display image, an antireflection glass is arranged in front of the inwardly viewing window (4).

6. Periscope according to one of the preceding claims, **characterized in that**, in order to ensure the full functionality of the display (15), the prism block (2) consists of glass or PMMA.

7. Periscope according to one of the preceding claims, **characterized in that** it has outer dimensions that coincide with those of commercially available periscopes and **in that** it is formed so as to be interchangeable with such commercially available periscopes without structural modifications.

8. Periscope according to one of the preceding claims, **characterized in that** the display unit (6) is arranged exchangeably on the housing (3) of the periscope (1).

## Revendications

1. Périscope destiné à un véhicule blindé, constitué d'un bloc prismatique (2) dans un boîtier (3), comprenant un viseur d'entrée (4) et un viseur de sortie (5) et comprenant également une unité d'affichage (6) disposée en position opposée à la face du viseur d'entrée, pour représenter des informations sans miroir de déviation dans le viseur d'entrée (4), dans lequel une image du viseur de sortie est visible sur une région inférieure (10) et une image d'affichage de l'unité d'affichage (6) est visible sur une région supérieure (9) du viseur d'entrée (4), **caractérisé en ce que** la région supérieure (9) du viseur d'entrée (4) correspond à au moins la moitié de la dimension de la hauteur du viseur d'entrée (4) et **en ce qu'**un interstice d'air (7) est présent entre l'unité d'affichage (6) et le bloc prismatique (2) et **en ce que**, pour éviter la buée ou la condensation, une surface optique du périscope (1) est équipée d'un dispositif de chauffage qui est monté sur la surface du bloc prismatique (2) qui est opposée à l'unité d'affichage (6) et/ou sur l'unité d'affichage (6).

2. Périscope selon la revendication 1, **caractérisé en ce que** le dispositif de chauffage de la surface optique est constitué d'une feuille chauffante (8).

3. Périscope selon la revendication 1, **caractérisé en ce que** le dispositif de chauffage de la surface optique est constitué d'un revêtement d'ITO (oxyde d'indium-étain).

4. Périscope selon l'une quelconque des revendications précédentes, **caractérisé en ce que** l'unité d'affichage (6) et/ou la surface du bloc prismatique (2) qui est opposée à cette dernière est munie d'un nano-revêtement contre la formation de givre.

5. Périscope selon l'une quelconque des revendications précédentes, **caractérisé en ce qu'**un verre antireflet est disposé à l'avant du viseur d'entrée (4) pour améliorer la transparence et la luminosité de l'image d'affichage.

6. Périscope selon l'une quelconque des revendications précédentes, **caractérisé en ce que** le bloc prismatique (2) est constitué de verre ou de PMMA pour garantir la pleine capacité de fonctionnement de l'afficheur (15).

7. Périscope selon l'une quelconque des revendications précédentes, **caractérisé en ce qu'**il présente des dimensions extérieures qui sont adaptées à celles de périscopes du commerce et ce qu'il est réalisé de manière à pouvoir être échangé avec ceux-ci sans modifications de structure.

8. Périscope selon l'une quelconque des revendications précédentes, **caractérisé en ce que** l'unité d'affichage (6) est disposée de manière interchangeable sur le boîtier (3) du périscope (1).
